# EUROPEAN PATENT APPLICATION

(11) **EP 4 741 212 A1**
(43) Date of publication of application: **13.05.2026**
(21) Application number: 24211181.3
(22) Date of filing: 06.11.2024
(51) Int. Cl.: B60L 15/20, B60W 30/18

(54) **CONTROL UNIT FOR AN ELECTRIC OR A HYBRID VEHICLE, SYSTEM AND COMPUTER IMPLEMENTED METHOD FOR OPERATING A VEHICLE**

(71) Applicant: VOLVO TRUCK CORPORATION, 405 08 Göteborg (SE)
(72) Inventor: RIOS, Jean-Benoît, 69330 MEYZIEU (FR)
(74) Representative: Lavoix

(57) **Abstract**

The present disclosure relates to a control unit (16, 200) for a vehicle (3), the vehicle being a full electric or a hybrid vehicle, the control unit (16, 200) comprising a communication interface (17, 226) and processing circuitry (18, 202) being coupled to the communication interface; the processing circuitry (18, 202) being adapted to receive, via the communication interface (17, 226), a message from a remote control device (20) to drive the vehicle a predefined distance, to command the gearbox (12) to engage with the highest available ratio, to command the at least one electric motor (10) in order to move the vehicle, to stop the motor when the vehicle has traversed the predefined distance, and to command to engage the at least one brake (8).

## Description

### TECHNICAL FIELD

The disclosure relates generally to a control unit for a vehicle. In particular aspects, the disclosure relates to a control unit for an electric or a hybrid vehicle, system and computer implemented method for operating a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Systems are for example known, in which an electric vehicle is controlled by a smart phone.

### SUMMARY

According to a first aspect of the disclosure, a control unit for a vehicle is provided, the vehicle being an electric or a hybrid vehicle, the vehicle comprising a plurality of wheels, at least one brake adapted to stop the movement of the plurality of wheels, and at least one electric motor being coupled via a gearbox to at least one of the of the plurality of wheels, the gearbox having a plurality of different ratios, the control unit comprising: a communication interface adapted to communicate with a remote control device, the at least one electric motor, the at least one brake and the gearbox; and a processing circuitry being coupled to the communication interface; the processing circuitry being adapted to receive, via the communication interface, a message from a remote control device to drive the vehicle a predefined distance, to command the gearbox to engage with the highest available ratio, to command the at least one electric motor in order to move the vehicle, to stop the at least one motor when the vehicle has traversed the predefined distance, and to command to engage the at least one brake. The first aspect of the disclosure may seek to improve the control of the vehicle for precise movements. A technical benefit may include precise control of the movement of the vehicle.

Optionally in some examples, including in at least one preferred example, the vehicle may be a utility vehicle. A technical benefit may include for utility vehicles a precise movement during maneuvering.

Optionally in some examples, including in at least one preferred example, the processing circuitry may be adapted to command a release of at least one park brake. A technical benefit may include that the vehicle is not moved prior to the command to move the vehicle to the electric motor.

Optionally in some examples, including in at least one preferred example, the control unit may be adapted to control the at least one electric motor using at least one of a speed control request, an angular speed control request, and an angular control request. A technical benefit may include the precise control of the motor and thus the movement of the vehicle.

Optionally in some examples, including in at least one preferred example, the predefined distance may be limited to a maximal value. A technical benefit may include that the vehicle is making an accident.

Optionally in some examples, including in at least one preferred example, the maximal value may be less than 1m. A technical benefit may include the precise range of the movement of the vehicle.

Optionally in some examples, including in at least one preferred example, the processing circuitry may determine that the vehicle has traversed the predefined distance by an open loop or a closed loop control. A technical benefit may include a price control of the motor and the movement of the vehicle.

Optionally in some examples, including in at least one preferred example, the open loop control may be time based. A technical benefit may include that less electronic devices like a sensor are required.

Optionally in some examples, including in at least one preferred example, the closed loop control may include an integration of an actual speed of at least one of the electric motor(s), an integration of the output shaft speed, and the integration of a wheel speed. A technical benefit may include the precise control of the movement of the vehicle.

Optionally in some examples, including in at least one preferred example, the closed loop control may include receiving data from a movement sensor. A technical benefit may include the reception of the precise position of the vehicle.

Optionally in some examples, including in at least one preferred example, the processing circuitry may be adapted to check whether the plurality of wheels are in a straight position. A technical benefit may include the controlled forward or backward movement of the vehicle in case the wheels are in the straight position.

Optionally in some examples, including in at least one preferred example, the processing circuitry may be adapted to receive a motor torque from the at least one electric motor, to compare the respective received motor torque with a reference torque, and to stop each electric motor if at least one of the motor torque(s) exceeds the reference torque. A technical benefit may include the detection of an obstacle for the movement.

Optionally in some examples, including in at least one preferred example, the processing circuitry may be adapted to command an engagement of the park brake and to command the gearbox to a disengaged position. A technical benefit may include to ensure a safe state of the vehicle when the movement is finished.

Optionally in some examples, including in at least one preferred example, the control unit may be adapted to command the vehicle to emit a warning noise during movement of the vehicle. A technical benefit may include to improve the security.

According to a second aspect of the disclosure, a vehicle is provided, the vehicle being an electric or a hybrid vehicle, the vehicle comprising a plurality of wheels, at least one brake adapted to stop the movement of the plurality of wheels, and at least one electric motor being coupled via a gearbox to at least one of the plurality of wheels, the gearbox having a plurality of different ratios, wherein the vehicle comprises a control unit according to an aspect disclosed herein. The second aspect of the disclosure may seek to improve the control of the vehicle for precise movements. A technical benefit may include precise control of the movement of the vehicle.

According to a third aspect of the disclosure, a system is provided comprising a vehicle according to an aspect disclosed herein and a remote control device, wherein the remote control device is adapted to be operated outside the vehicle. The third aspect of the disclosure may seek to improve the control of the vehicle for precise movements. A technical benefit may include precise control of the movement of the vehicle.

Optionally in some examples, including in at least one preferred example, the remote control device may be adapted to emit an emergency stop signal to the control unit, wherein upon reception, the control unit is adapted to command the engagement of the at least one brake. A technical benefit may include improve the security.

According to a fourth aspect of the disclosure, a computer-implemented method for operating a vehicle is provided, the vehicle being an electric or a hybrid vehicle, the vehicle comprising a plurality of wheels, at least one brake adapted to stop the movement of the plurality of wheels, and at least one electric motor being coupled via a gearbox to at least one of the plurality of wheels, the gearbox having a plurality of different ratios, the control unit comprising a communication interface adapted to communicate with a remote control device, the at least one electric motor, the at least one brake and the gear box, the method comprising: receiving, by a processing circuitry of a control unit, a command from a remote control device to drive the vehicle a predefined distance; commanding, by the processing circuitry, to engage the gearbox with the highest available ratio; commanding, by the processing circuitry, the at least one electric motor in order to move the vehicle; commanding, by the processing circuitry, to stop the at least one electric motor when the vehicle has traversed the predefined distance; and commanding, by the processing circuitry, to engage the at least one brake. The fourth aspect of the disclosure may seek to improve the control of the vehicle for precise movements. A technical benefit may include precise control of the movement of the vehicle.

Optionally in some examples, including in at least one preferred example, the method may comprise commanding a release of the brake. A technical benefit may include that the vehicle is not moved prior to the command to move the vehicle to the electric motor.

Optionally in some examples, including in at least one preferred example, the method may comprise checking whether the plurality of wheels are in a straight position. A technical benefit may include the controlled forward or backward movement of the vehicle in case the wheels are in the straight position.

Optionally in some examples, including in at least one preferred example, the method may comprise: receiving a motor torque of the at least one electric motor, comparing the received motor torque with a reference torque, and stopping each electric motor if the motor torque exceeds the reference torque. A technical benefit may include the detection of an obstacle for the movement.

According to a fifth aspect of the disclosure, a computer program product comprising program code for performing, when executed by the processing circuitry, the method of an aspect disclosed herein.

According to a sixth aspect of the disclosure, a non-transitory computer-readable storage medium comprising instructions, which when executed by the processing circuitry, cause the processing circuitry to perform the method of an aspect disclosed herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system according to an example.
**FIG. 2** is a flow chart of a method according to an example.
**Fig. 3** is another view of **FIG. 1**, according to an example.
**FIG. 4** is a flow chart of an exemplary method for operating a vehicle according to an example.
**FIG. 5** is a schematic diagram of a computer system **200** for implementing examples disclosed herein.

### DETAILED DESCRIPTION

The detailed description set forth below provides information and examples of the disclosed technology with sufficient detail to enable those skilled in the art to practice the disclosure.

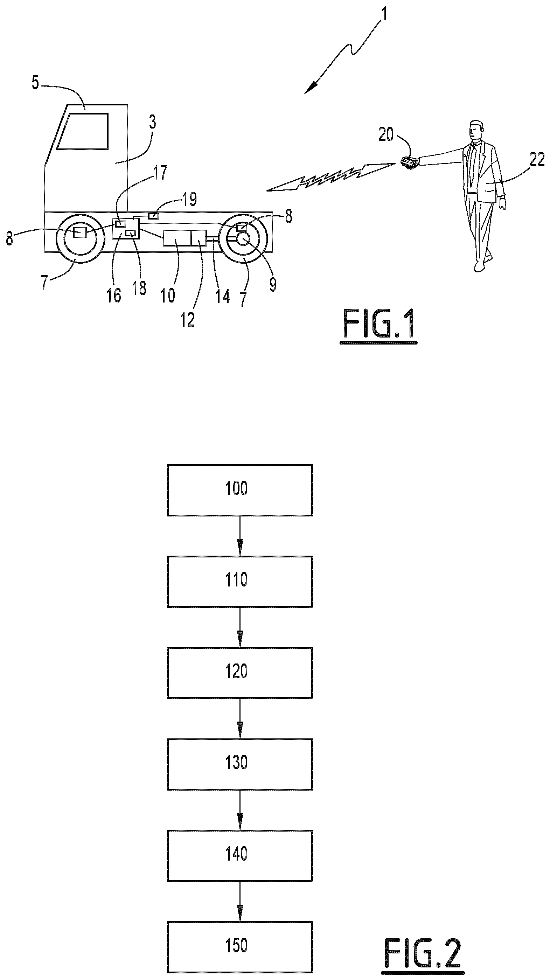

**FIG. 1** is an exemplary system diagram of a system 1. The system 1 includes a vehicle 3 and a remote control device 20. According to examples, the vehicle 3 is a utility vehicle, for example a truck, a bus or the like.

The vehicle 3 includes a cabin 5 for an operator 22.

The vehicle 3 includes a plurality of wheels 7. For example, the plurality of wheels 7 comprises front wheels and rear wheels. The front wheels 7 may be steerable about a substantial vertical axis. The plurality of wheels 7 are adapted to be stopped by at least one brake 8. The brake 8 is a park brake and/or a service brake. A park brake is adapted to hold the vehicle 3 stationary when parked. A service brake is adapted to slow down and stop the vehicle 3 while in motion.

The rear wheels 7 are turning about an axle 9.

The vehicle 3 includes at least one electric motor 10, which is coupled via a gearbox 12 and a shaft 14 to the axle 9. In other words, the electric motor 10 is coupled via the gearbox 12 to the plurality of wheels 7.

The gearbox 12 includes gears in order to transmit power from the electric motor 10 to the shaft 14 in case it is engaged. In case the gearbox 12 is disengaged or in a disengaged position, the power is not transmitted from the at last one electric motor 10 to the shaft 14 and thus to the wheels 7. If the gearbox 12 is in disengaged position this is also called neutral position. The gearbox 12, when engaged, has a plurality of different ratios for the transmission between rotation of the electric motor 10 and the rotation of the shaft 14. For example, the gearbox 12 has between 2 and 7 gears, in particular between 4 and 6 gears.. The available ratios, including the final gear ratio, range for example between 6 and 50. The final gear may be in examples arranged between the shaft 14 and the axle 9. In some examples, the final ratio may be between 2 and 5.

The vehicle 3 includes a control unit 16. The control unit 16 includes a communication interface 17 and a processing circuitry 18. The control unit 16 is coupled, for example via the communication interface 17 to the at least one electric motor 10, the gearbox 12 and the at least one brake 8. For example, the control unit 16 is controlling the driveline comprising the at least one electric motor 10 and the gearbox 12.

According to examples, the control unit 16 is adapted to control the at least one electric motor 10 using at least one of a speed control request, an angular speed control request, and an angular control request. This enables to move the vehicle 3 for an accurate predefined distance.

The vehicle 3 includes in an example at least one movement sensor 19. For example, the at least one movement sensor 19 may be a distance sensor, a position sensor, an accelerometer, a radar or the like. The control unit 16 is coupled, for example via the communication interface 17 to the at least one movement sensor 19.

In some examples, the control unit 16 is adapted to control the movement of the vehicle 3 by an open loop or a closed loop control.

For example, the open loop control is time based.

The closed loop control may include an integration of an actual speed of at least one of the electric motor(s) 10, an integration of the output shaft speed of the shaft 14, and the integration of a wheel speed of the wheels 7.

Another example if the closed loop control includes receiving data from a movement sensor 19, and to control the at least one motor based of the data of the movement sensor 19. The control unit 16 may include one or more closed loop controls.

In some examples, the control unit 16 includes in the control of the movement of the vehicle 3 a backlash in mechanical parts, a stiffness of the driveline to reach the requested distance.

The control unit 16 may apply a ramp or a filter on a motor drive command to limit the driveline jerk and noise.

The control unit 16 may command the at least one electric motor 10 to drive the vehicle in forward or reverse direction.

In an example, the control unit 16 is adapted to command the vehicle 3 to emit a warning noise during movement of the vehicle 3.

The remote control device 20 is adapted to be operated outside the vehicle 3. The remote control device 20 can be operated by an operator 22. For example, the operator 22 stays outside the cabin 5. The remote control device 20 may be adapted to receive voice commands or manual commands by buttons or gesture commands.

In some examples, the voice commands may be "move forward 20 cm" or "move reverse until trailer is connected" or "test trailer connection" or "move forward slowly while I press the button". The commands of the operator 22 are transformed into corresponding movement messages, for example by the remote control device 20.

The movement message includes a command to drive the vehicle 3 a predefined distance. The predefined distance may be limited to a maximal value. For example, the maximal distance is less than 1m. In particular the predefined distance is less than 50cm.

The remote control device 20 and the control unit 16 communicate via a wireless connection with each other. For example, the communication interface 17 is adapted to communicate with the remote control device 20.

In an example, the remote control device 20 is a cell phone or a tablet computer.

In other examples, the remote control device 20 may include buttons on a chassis of the vehicle 3. In such a case, there may be a wired connection between the remote control device 20 and the control unit 16.

The control unit 16 is adapted to receive messages from the remote control device 20. For example, the remote control device 20 is adapted to emit a message to drive the vehicle 3 a predefined distance.

According to examples, a new movement message may be only emitted by the remote control device 20 or accepted by the control unit 16, when the movement of the previous movement message has been finished and/or the vehicle 3 has been stopped.

In other examples, the remote control device 20 is adapted to emit an emergency stop signal to the control unit 16. For example, the emergency stop signal may be triggered by a predefined movement of the remote control device 20, for example by turning the remote control device 20 vertical, by detecting a drop of the remote control device 20, or by pushing a button of the remote control device 20.

Upon reception if the emergency stop signal, the control unit 16 is adapted to command the engagement of the at least one brake 8, in particular the service brake 8.

In some examples, the remote control device 20 is adapted to give the operator 22 feedback. For example, that his request has been understood and accepted by the vehicle or that the vehicle 3 is moving.

The communication between the remote control device 20 and the control unit 16 may be protected against communication failures or hacking.

In an example, if the control unit 16 detects that the communication between the control unit 16 and the remote control device 20 is lost while the vehicle 3 is moving due to a movement message emitted by the remote control unit 20, the control unit 16 is adapted to command the engagement of the at least one brake 8, in particular the service brake 8 to stop the vehicle 3.

**FIG. 2** is a flow chart of a method for operating the vehicle 3 according to an example. The processing circuitry 18 of the control unit 16, receives a message, in particular a movement message, from the remote control device 20 to drive the vehicle 3 a predefined distance.

In box 100 the control unit 16 checks whether the conditions allow a movement by checking at least one of whether the gearbox 12 is engaged, whether the brake 8, in particular the park brake, is applied, and whether the plurality of wheels 7 are in the straight position. In some examples, in case an inclination sensor exists the movement may be disabled in case of too important slope. Then, the control unit 16 commands, by the processing circuitry 18, to command the gearbox 12 with the highest available ratio. With the highest available ratio, the moving accuracy may be better as the at least one motor 10 rotates more to reach the requested distance. In some examples, the highest available ratio, including the final ratio, may be greater than 25.

In box 110, the brake 8, in particular the park brake and/or the service brake is released.

In box 120, the control unit 16, in particular the processing circuitry 18, commands the at least one electric motor 10 to move the vehicle 3. For example, the control unit requests speed control or angular control to the at least one electric motor 10 to move the vehicle 3 a predefined distance.

In box 130, the control unit 16, in particular the processing circuitry 18, commands to stop the at least one electric motor 10 when the vehicle 3 has traversed the predefined distance. In other words, when the predefined distance has been achieved.

According to examples, the control unit 16 applies for this purpose an open loop or a closed loop control.

In some examples, the control unit 16, in particular the processing circuitry 18, receives motor torque(s) from the at least one electric motor 10, compares the respective received motor torque with a reference torque, and stops each electric motor 10 if at least one of the motor torque(s) exceeds the reference torque. This may mean that the vehicle is blocked by an obstacle, or touches a trailer.

In box 140, the control unit 16, in particular the processing circuitry 18, commands to engage at least one brake 8, in particular the park brake and/or the service brake.

In box 150, the control unit 16, in particular the processing circuitry 18, commands to disengage the gearbox 12.

In some examples, the movement message to drive a predefined distance is limited to a specific maximal distance. Then a new movement message may be only emitted by the remote control unit 20, when the first movement of the vehicle 3 is finished.

According the examples, the operator 22 may stay outside the cabin 5 and can control remotely the position of the vehicle 3 with a very high accuracy. The operator may check the position of the vehicle 3 at the same time.

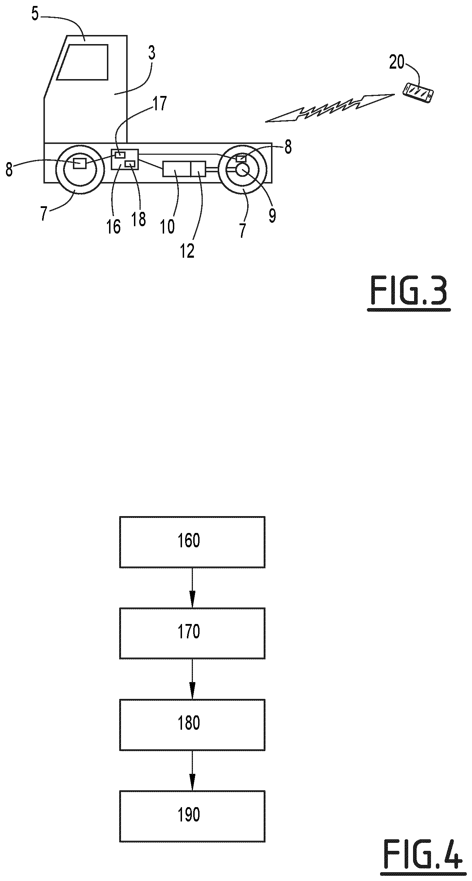

**FIG. 3** is another view of **FIG. 1**, according to an example. Fig. 3 shows a control unit 16 for a vehicle 3, the vehicle 3 being an electric or a hybrid vehicle, the vehicle 3 comprising a plurality of wheels 7, at least one brake 8 adapted to stop the movement of the plurality of wheels 7, and at least one electric motor 10 being coupled via a gearbox 12 to at least one of the wheels 7, the gearbox 12 having a plurality of different ratios, the control unit 16 comprising: a communication interface 17 adapted to communicate with a remote control device 20, the at least one electric motor 12, the at least one brake 8 and the gearbox 12; and processing circuitry 18 being coupled to the communication interface 17;
the processing circuitry 18 being adapted to receive, via the communication interface 17, a message from a remote control device 20 to drive the vehicle a predefined distance, to command the gearbox 12 to engage with the highest available ratio, to command the at least one electric motor 10 in order to move the vehicle 3, to stop the at least one electric motor 10 when the vehicle 3 has traversed the predefined distance, and to command to engage the at least one brake 8.

**FIG. 4** is a flow chart of an exemplary method for operating a vehicle 3 according to an example. The computer-implemented method is for operating a vehicle 3. The vehicle 3 is a full electric or a hybrid vehicle, the vehicle comprising a plurality of wheels 7, at least one brake 8 adapted to stop the movement of the plurality of wheels 7, and at least one electric motor 10 being coupled via a gearbox 12 to at least one of the plurality of wheels 7, the gearbox 12 having a plurality of different ratios, the control unit 16 comprising a communication interface 17 adapted to communicate with a remote control device 20, the at least one electric motor 10, the at least one brake 8 and the gearbox 12. According to an example the method comprises: receiving, by a processing circuitry 18 of a control unit 16, a command from a remote control device 20 to drive the vehicle 3 a predefined distance; commanding 160, by the processing circuitry 18, to engage the gearbox 12 with the highest available ratio; commanding 170 by the processing circuitry 18, the at least one electric motor 10 in order to move the vehicle 3; commanding 180, by the processing circuitry, to stop the at least one electric motor 10 when the vehicle 3 has traversed the predefined distance; and commanding 190, by the processing circuitry 18, to engage the at least one brake 8.

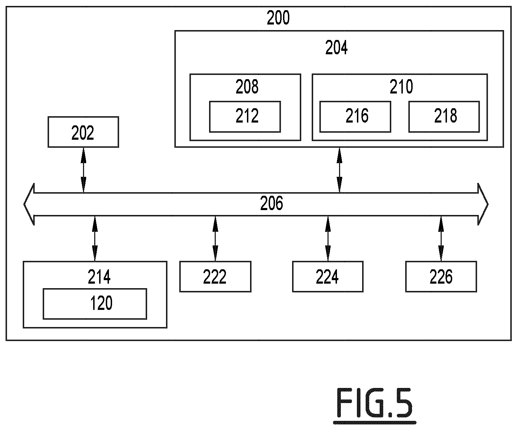

**FIG. 5** is a schematic diagram of a computer system **200** for implementing examples disclosed herein. The computer system **200** is adapted to execute instructions from a computer-readable medium to perform these and/or any of the functions or processing described herein. The computer system **200** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **200** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **200** may comprise at least one computing device or electronic device capable of including firmware, hardware, and/or executing software instructions to implement the functionality described herein. The computer system **200** may include processing circuitry **202** (e.g., processing circuitry including one or more processor devices or control units), a memory **204,** and a system bus **206.** The computer system **200** may include at least one computing device having the processing circuitry **202.** The system bus **206** provides an interface for system components including, but not limited to, the memory **204** and the processing circuitry **202.** The processing circuitry **202** may include any number of hardware components for conducting data or signal processing or for executing computer code stored in memory **204.** The processing circuitry **202** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **202** may further include computer executable code that controls operation of the programmable device.

The system bus **206** may be any of several types of bus structures that may further interconnect to a memory bus (with or without a memory controller), a peripheral bus, and/or a local bus using any of a variety of bus architectures. The memory **204** may be one or more devices for storing data and/or computer code for completing or facilitating methods described herein. The memory **204** may include database components, object code components, script components, or other types of information structure for supporting the various activities herein. Any distributed or local memory device may be utilized with the systems and methods of this description. The memory **204** may be communicably connected to the processing circuitry **202** (e.g., via a circuit or any other wired, wireless, or network connection) and may include computer code for executing one or more processes described herein. The memory **204** may include non-volatile memory **208** (e.g., read-only memory (ROM), erasable programmable read-only memory (EPROM), electrically erasable programmable read-only memory (EEPROM), etc.), and volatile memory **210** (e.g., random-access memory (RAM)), or any other medium which can be used to carry or store desired program code in the form of machine-executable instructions or data structures and which can be accessed by a computer or other machine with processing circuitry **202.** A basic input/output system (BIOS) **212** may be stored in the non-volatile memory **208** and can include the basic routines that help to transfer information between elements within the computer system **200.**

The computer system **200** may further include or be coupled to a non-transitory computer-readable storage medium such as the storage device **214,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **214** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **214** and/or in the volatile memory **210,** which may include an operating system **216** and/or one or more program modules **218.** All or a portion of the examples disclosed herein may be implemented as a computer program **220** stored on a transitory or non-transitory computer-usable or computer-readable storage medium (e.g., single medium or multiple media), such as the storage device **214,** which includes complex programming instructions (e.g., complex computer-readable program code) to cause the processing circuitry **202** to carry out actions described herein. Thus, the computer-readable program code of the computer program **220** can comprise software instructions for implementing the functionality of the examples described herein when executed by the processing circuitry **202.** In some examples, the storage device **214** may be a computer program product (e.g., readable storage medium) storing the computer program **220** thereon, where at least a portion of a computer program **220** may be loadable (e.g., into a processor) for implementing the functionality of the examples described herein when executed by the processing circuitry **202.** The processing circuitry **202** may serve as a controller or control system for the computer system **200** that is to implement the functionality described herein.

The computer system **200** may include an input device interface **222** configured to receive input and selections to be communicated to the computer system **200** when executing instructions, such as from a keyboard, mouse, touch-sensitive surface, etc. Such input devices may be connected to the processing circuitry **202** through the input device
interface **222** coupled to the system bus **206** but can be connected through other interfaces, such as a parallel port, an Institute of Electrical and Electronic Engineers (IEEE) 1394 serial port, a Universal Serial Bus (USB) port, an IR interface, and the like. The computer system **200** may include an output device interface **224** configured to forward output, such as to a display, a video display unit (e.g., a liquid crystal display (LCD) or a cathode ray tube (CRT)). The computer system **200** may include a communications interface **226** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 16, 200 for a vehicle 3, the vehicle being an electric or a hybrid vehicle, the vehicle comprising a plurality of wheels 7, at least one brake 8 adapted to stop the movement of the plurality of wheels, and at least one electric motor 10 being coupled via a gearbox 12 to at least one of the plurality wheels 7, the gearbox 12 having a plurality of different ratios, the control unit 16, 200 comprising:
a communication interface 17, 226 adapted to communicate with a remote control device 20, the at least one electric motor 10, the at least one brake 8 and the gearbox 12; and a processing circuitry 18, 202 being coupled to the communication interface 17, 226;
the processing circuitry 18, 202 being adapted to receive, via the communication interface 17, 226, a message from a remote control device 20 to drive the vehicle 3 a predefined distance, to command the gearbox 12 to engage with the highest available ratio, to command the at least one electric motor 10 in order to move the vehicle 3, to stop the at least one electric motor 10 when the vehicle 3 has traversed the predefined distance, and to command to engage the at least one brake 8.

Example 2: The control unit 16, 200 according to example 1 wherein the vehicle 3 is a utility vehicle.

Example 3: The control unit 16, 200 according to example 1 or 2, wherein the processing circuitry 18, 202 is adapted to command 110 a release of at least one park brake.

Example 4: The control unit 16, 200 according to any one of the preceding examples, wherein the control unit is adapted to control the at least one electric motor using at least one of a speed control request, an angular speed control request, and an angular control request.

Example 5: The control unit 16, 200 according to any one of the preceding examples, wherein the predefined distance is limited to a maximal value.

Example 6: The control unit 16, 200 according to example 4, wherein the maximal value is less than 1m.

Example 7: The control unit 16, 200 according to any one of the preceding examples wherein the processing circuitry determines that the vehicle has traversed the predefined distance by an open loop or a closed loop control.

Example 8: The control unit 16, 200 according to example 7, wherein the open loop control is time based.

Example 9: The control unit 16, 200 according to example 7, wherein the closed loop control includes an integration of an actual speed of at least one of the electric motor(s) 10, an integration of the output shaft speed 14, and the integration of a wheel speed 7.

Example 10: The control unit 16, 200 according to example 8, wherein the closed loop control includes receiving data from a movement sensor 19.

Example 11: The control unit 16, 200 according to any one of the preceding examples, wherein the processing circuitry 18, 202 is adapted to check whether the plurality of wheels 7 are in a straight position.

Example 12: The control unit 16, 200 according to any one of the preceding examples, wherein the processing circuitry 18, 202 is adapted to receive a motor torque from the at least one electric motor 10, to compare the respective received motor torque with a reference torque, and to stop each electric motor 10 if at least one of the motor torque(s) exceeds the reference torque.

Example 13: The control unit 16, 200 according to any one of the preceding examples, wherein the processing circuitry 18, 202 is adapted to command 110 an engagement of the park brake and to command the gearbox to a disengaged position.

Example 14: The control unit 16, 200 according to any one of the preceding examples, wherein the control unit is adapted to command the vehicle to emit a warning noise during movement of the vehicle.

Example 15: A vehicle 3, the vehicle being an electric or a hybrid vehicle, the vehicle comprising a plurality of wheels 7, at least one brake 8 adapted to stop the movement of the plurality of wheels 7, and at least one electric motor 10 being coupled via a gearbox 12 to at least one of the plurality of wheels 7, the gearbox 12 having a plurality of different ratios, wherein the vehicle 3 comprises a control unit 16, 200 according to any one of the preceding examples.

Example 16: A system 1 comprising a vehicle 3 according to example 14 and a remote control device, wherein the remote control device 20 is adapted to be operated outside the vehicle.

Example 17: The system 1 according to example 15, wherein the remote control device is adapted to emit an emergency stop signal to the control unit, wherein upon reception, the control unit is adapted to command the engagement of the at least one brake.

Example 18: A computer-implemented method for operating a vehicle 3, the vehicle being an electric or a hybrid vehicle, the vehicle comprising a plurality of wheels 7, at least one brake 8 adapted to stop the movement of the plurality of wheels 7, and at least one electric motor 10 being coupled via a gearbox 12 to at least one of the plurality of wheels 7, the gearbox 12 having a plurality of different ratios, the control unit 16, 200 comprising a communication interface 17, 226 adapted to communicate with a remote control device 20, the at least one electric motor 10, the at least one brake 8 and the gear box 12, the method comprising:
receiving, by a processing circuitry 18, 202 of a control unit 16, 200, a command from a remote control device 20 to drive the vehicle a predefined distance;
commanding 100, 160, by the processing circuitry, to engage the gearbox 12 with the highest available ratio;
commanding 120, 170, by the processing circuitry, the at least one electric motor 10 in order to move the vehicle 3;
commanding 130, 180, by the processing circuitry, to stop the at least one electric motor 10 when the vehicle has traversed the predefined distance; and
commanding 140, 190, by the processing circuitry, to engage the at least one brake.

Example 19: The computer-implemented method according to example 17, comprising commanding 110 a release of the brake 8.

Example 20: The computer-implemented method according to example 17 or 18, comprising checking whether the plurality of wheels 7 are in a straight position.

Example 21: The computer-implemented method according to any one of the preceding examples 17 to 19, comprising:
receiving a motor torque of the at least one electric motor 10,
comparing the received motor torque with a reference torque, and
stopping each electric motor 10 if the motor torque exceeds the reference torque.

Example 22: A computer program product comprising program code for performing, when executed by the processing circuitry 18, 202, the method of any of examples 17 to 19.

Example 13: A non-transitory computer-readable storage medium comprising instructions, which when executed by the processing circuitry, cause the processing circuitry 18, 202 to perform the method of any of examples 17 -19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (16, 200) for a vehicle (3), the vehicle (3) being an electric or a hybrid vehicle, the vehicle (3) comprising a plurality of wheels (7), at least one brake (8) adapted to stop the movement of the plurality of wheels (7), and at least one electric motor (10) being coupled via a gearbox (12) to at least one of the plurality of wheels (7), the gearbox (12) having a plurality of different ratios, the control unit (16, 200) comprising:
a communication interface (17, 226) adapted to communicate with a remote control device (20), the at least one electric motor (10), the at least one brake (8) and the gearbox (12); and
a processing circuitry (18, 202) being coupled to the communication interface (17, 226);
the processing circuitry (18, 202) being adapted to receive, via the communication interface (17, 226), a message from a remote control device (20) to drive the vehicle (3) a predefined distance, to command the gearbox (12) to engage with the highest available ratio, to command the at least one electric motor (10) in order to move the vehicle (3), to stop the at least one electric motor (10) when the vehicle (3) has traversed the predefined distance, and to command to engage the at least one brake (8).

2. The control unit (16, 200) according to claim 1 wherein the vehicle (3) is a utility vehicle.

3. The control unit (16, 200) according to claim 1 or 2, wherein the processing circuitry (18, 202) is adapted to command (110) a release of at least one park brake.

4. The control unit (16, 200) according to any one of the preceding claims, wherein the control unit (16, 200) is adapted to control the at least one electric motor (10) using at least one of a speed control request, an angular speed control request, and an angular control request.

5. The control unit (16, 200) according to any one of the preceding claims, wherein the predefined distance is limited to a maximal value.

6. The control unit (16, 200) according to claim 4, wherein the maximal value is less than 1m.

7. The control unit (16, 200) according to any one of the preceding claims wherein the processing circuitry (18, 202) determines that the vehicle (3) has traversed the predefined distance by an open loop or a closed loop control.

8. The control unit (16, 200) according to claim 7, wherein the open loop control is time based.

9. The control unit (16, 200) according to claim 7, wherein the closed loop control includes an integration of an actual speed of at least one of the electric motor(s) (10), an integration of the output shaft speed (14), and the integration of a wheel speed (7).

10. The control unit (16, 200) according to claim 8, wherein the closed loop control includes receiving data from a movement sensor (19).

11. The control unit (16, 200) according to any one of the preceding claims, wherein the processing circuitry (18, 202) is adapted to check whether the plurality of wheels (7) are in a straight position.

12. The control unit (16, 200) according to any one of the preceding claims, wherein the processing circuitry (18, 202) is adapted to receive a motor torque from the at least one electric motor (10), to compare the respective received motor torque with a reference torque, and to stop each electric motor (10) if at least one of the motor torque(s) exceeds the reference torque.

13. The control unit (16, 200) according to any one of the preceding claims, wherein the processing circuitry (18, 202) is adapted to command (110) an engagement of the park brake (8) and to command the gearbox (12) to a disengaged position.

14. A vehicle (3), the vehicle (3) being an electric or a hybrid vehicle, the vehicle (3) comprising a plurality of wheels (7), at least one brake (8) adapted to stop the movement of the plurality of wheels (7), and at least one electric motor (10) being coupled via a gearbox (12) to at least one of the plurality of wheels (7), the gearbox (12) having a plurality of different ratios, wherein the vehicle (3) comprises a control unit (16, 200) according to any one of the preceding claims.

15. A computer-implemented method for operating a vehicle (3), the vehicle (3) being an electric or a hybrid vehicle, the vehicle (3) comprising a plurality of wheels (7), at least one brake (8) adapted to stop the movement of the plurality of wheels (7), and at least one electric motor (10) being coupled via a gearbox (12) to at least one of the plurality of wheels (7), the gearbox (12) having a plurality of different ratios, the control unit (16, 200) comprising a communication interface (17, 226) adapted to communicate with a remote control device (20), the at least one electric motor (10), the at least one brake (8) and the gearbox (12), the method comprising:
receiving, by a processing circuitry (18, 202) of a control unit (16, 200), a command from a remote control device (20) to drive the vehicle a predefined distance;
commanding (100, 160), by the processing circuitry (18, 202), to engage the gearbox (12) with the highest available ratio;
commanding (120, 170), by the processing circuitry (18, 202), the at least one electric motor (10) in order to move the vehicle (3);
commanding (130, 180), by the processing circuitry (18, 202), to stop the at least one electric motor (10) when the vehicle has traversed the predefined distance; and
commanding (140, 190), by the processing circuitry (18, 202), to engage the at least one brake.

## Amended claims

### Amended claims in accordance with Rule 137(2) EPC.

1. A control unit (16, 200) for a heavy-duty vehicle (3), the vehicle (3) being an electric or a hybrid vehicle, the vehicle (3) comprising a plurality of wheels (7), at least one brake (8) adapted to stop the movement of the plurality of wheels (7), and at least one electric motor (10) being coupled via a gearbox (12) to at least one of the plurality of wheels (7), the gearbox (12) having a plurality of different ratios, the control unit (16, 200) comprising:
a communication interface (17, 226) adapted to communicate with a remote control device (20), the at least one electric motor (10), the at least one brake (8) and the gearbox (12); and
a processing circuitry (18, 202) being coupled to the communication interface (17, 226);
the processing circuitry (18, 202) being adapted to receive, via the communication interface (17, 226), a message from a remote control device (20) to drive the vehicle (3) a predefined distance, to command the gearbox (12) to engage with the highest available ratio, to command the at least one electric motor (10) in order to move the vehicle (3), to stop the at least one electric motor (10) when the vehicle (3) has traversed the predefined distance, and to command to engage the at least one brake (8), wherein the control unit (16) applies a filter on the motor drive command to limit a driveline jerk and noise.

2. The control unit (16, 200) according to claim 1 wherein the vehicle (3) is a truck or a bus.

3. The control unit (16, 200) according to claim 1 or 2, wherein the processing circuitry (18, 202) is adapted to command (110) a release of at least one park brake.

4. The control unit (16, 200) according to any one of the preceding claims, wherein the control unit (16, 200) is adapted to control the at least one electric motor (10) using at least one of a speed control request, an angular speed control request, and an angular control request.

5. The control unit (16, 200) according to any one of the preceding claims, wherein the predefined distance is limited to a maximal value.

6. The control unit (16, 200) according to claim 4, wherein the maximal value is less than 1m.

7. The control unit (16, 200) according to any one of the preceding claims wherein the processing circuitry (18, 202) determines that the vehicle (3) has traversed the predefined distance by an open loop or a closed loop control.

8. The control unit (16, 200) according to claim 7, wherein the open loop control is time based.

9. The control unit (16, 200) according to claim 7, wherein the closed loop control includes an integration of an actual speed of at least one of the electric motor(s) (10), an integration of the output shaft speed (14), and the integration of a wheel speed (7).

10. The control unit (16, 200) according to claim 7, wherein the closed loop control includes receiving data from a movement sensor (19).

11. The control unit (16, 200) according to any one of the preceding claims, wherein the processing circuitry (18, 202) is adapted to check whether the plurality of wheels (7) are in a straight position.

12. The control unit (16, 200) according to any one of the preceding claims, wherein the processing circuitry (18, 202) is adapted to receive a motor torque from the at least one electric motor (10), to compare the respective received motor torque with a reference torque, and to stop each electric motor (10) if at least one of the motor torque(s) exceeds the reference torque.

13. The control unit (16, 200) according to any one of the preceding claims, wherein the processing circuitry (18, 202) is adapted to command (110) an engagement of the park brake (8) and to command the gearbox (12) to a disengaged position.

14. A heavy duty vehicle (3), the vehicle (3) being an electric or a hybrid vehicle, the vehicle (3) comprising a plurality of wheels (7), at least one brake (8) adapted to stop the movement of the plurality of wheels (7), and at least one electric motor (10) being coupled via a gearbox (12) to at least one of the plurality of wheels (7), the gearbox (12) having a plurality of different ratios, wherein the vehicle (3) comprises a control unit (16, 200) according to any one of the preceding claims.

15. A computer-implemented method for operating a heavy duty vehicle (3), the vehicle (3) being an electric or a hybrid vehicle, the vehicle (3) comprising a plurality of wheels (7), at least one brake (8) adapted to stop the movement of the plurality of wheels (7), and at least one electric motor (10) being coupled via a gearbox (12) to at least one of the plurality of wheels (7), the gearbox (12) having a plurality of different ratios, the control unit (16, 200) comprising a communication interface (17, 226) adapted to communicate with a remote control device (20), the at least one electric motor (10), the at least one brake (8) and the gearbox (12), the method comprising:
receiving, by a processing circuitry (18, 202) of a control unit (16, 200), a command from a remote control device (20) to drive the vehicle a predefined distance;
commanding (100, 160), by the processing circuitry (18, 202), to engage the gearbox (12) with the highest available ratio;
commanding (120, 170), by the processing circuitry (18, 202), the at least one electric motor (10) in order to move the vehicle (3), wherein the control unit (16) applies a filter on the motor drive command to limit a driveline jerk and noise;
commanding (130, 180), by the processing circuitry (18, 202), to stop the at least one electric motor (10) when the vehicle has traversed the predefined distance; and
commanding (140, 190), by the processing circuitry (18, 202), to engage the at least one brake.
